# EUROPEAN PATENT SPECIFICATION

(11) **EP 4 491 896 B1**
(45) Date of publication and mention of the grant of the patent: **27.05.2026**
(21) Application number: 23766992.4
(22) Date of filing: 10.03.2023
(51) Int. Cl.: F16C 29/06, F16N 9/04, F16C 33/66

(54) **LINEAR GUIDE**
LINEARFÜHRUNG
GUIDE LINÉAIRE

(30) Priority: 11.03.2022 JP 2022037909
(43) Date of publication of application: 15.01.2025
(73) Proprietor: NSK Ltd., Tokyo 141-8560 (JP)
(72) Inventor: KAWASAKI, Shota, Fujisawa-shi, Kanagawa 251-8501 (JP); MIZUMURA, Yoshinori, Hanyu-shi, Saitama 348-8506 (JP)
(74) Representative: Grünecker Patent- und Rechtsanwälte PartG mbB
(86) International application number: PCT/JP2023/009461
(87) International publication number: WO 2023/171816

(56) References cited:
- CN-A- 112 228 455
- JP-A- 2008 138 840
- JP-A- 2008 291 967
- JP-A- H07 151 145

## Description

### TECHNICAL FIELD

The present invention relates to a linear guide, and more particularly to a linear guide enabling lubricant to be evenly supplied to a plurality of direction changing paths in an end cap.

### BACKGROUND ART

In the related art, a linear guide (linear motion guide) includes a guide rail extending in an axial direction, and a slider extending over the guide rail in a manner of being movable relative to the guide rail, and the slider relatively moves in the axial direction on the guide rail via a plurality of rolling elements (balls or rollers) circulating between rolling element rolling grooves (rolling element circulation paths) respectively formed in the guide rail and the slider. Such a linear guide is often used in linear movement mechanisms of various production facilities. In order to stably use the linear guide over a long period of time, it is important to supply a sufficient amount of lubricant (lubricating oil or grease) to the guide rail and the rolling elements through a lubricant supply path to maintain a good lubrication state.

The lubricant used for the linear guide is classified into two types including grease and oil (lubricating oil). The grease and the oil are selectively used according to a use environment of the linear guide. For example, the oil is used in an environment in which a coolant of a machine tool or the like is scattered, and the grease is used in other high-speed moving parts, vacuum environments, and clean room specifications.

The grease and the oil have different ease of flow when flowing through the lubricant supply path. Therefore, conflicting cross-sectional areas are required for the lubricating oil supply path when supplying grease and when supplying oil.

Further, it is desirable that the lubricant is evenly supplied (flows separately) to a plurality of direction changing paths (rolling element U-turn paths) defined between an end cap and a return guide.

Patent Literature 1 proposes a motion guide device (linear guide) in which an attachment that narrows a lubricant supply path of an end plate (end cap) when oil is used is disposed in the lubricant supply path such that a failure such as leakage does not occur regardless of the type of lubricant.

In the motion guide device, the lubricant supply path for oil can be suitably secured using the attachment provided in the lubricant supply path. Further, in two upper and lower direction changing paths formed between a return piece part (return guide) and the end plate, the lubricant can be evenly distributed by a branching portion of the lubricant supply path connected to the direction changing paths.

Patent Literature 2 proposes a lubricating device for an infinite linear motion guide unit (linear guide) in which oil supply paths (lubricant supply paths) are formed to have substantially the same oil path length from a nipple hole bored in a side surface of a side plate (end cap) to respective direction changing paths provided symmetrically from both sides.

In the lubricating device, an amount of lubricant supplied from the nipple hole to the both direction changing paths is made uniform, thereby enabling the lubricant to be evenly distributed to the left and right direction changing paths.

### CITATION LIST

### PATENT LITERATURE

Patent Literature 1: JP2011-153669A
Patent Literature 2: JPH01-73518U
Patent Literature 3: JP2008-138840A

### SUMMARY OF INVENTION

### TECHNICAL PROBLEM

However, in the motion guide device of Patent Literature 1, a process of attaching the attachment in the lubricant supply path of the end plate occurs, and thus the manufacturing cost may increase.

Further, in the lubricating device of Patent Literature 2, a method of enabling the lubricant to be evenly distributed to the upper and lower direction changing paths when there are plurality of direction changing paths is not disclosed. In particular, when the grease is used as the lubricant and when the oil is used as the lubricant, viscosities are different. Therefore, even if a shape of the lubricant supply path is designed such that the grease can be evenly distributed to the upper and lower direction changing paths, the oil may pass at it is through a lubricant supply hole that communicates with the upper direction changing path when the oil flows, and the lubricant may concentrate in the lower direction changing path. If there is such a circulation path in which a supply amount of the lubricant is insufficient, there is a risk of causing a failure such as burning of the infinite linear motion guide unit (linear guide). Patent literature 3 discloses a linear guide according to the preamble of claim 1.

The present invention has been made in view of the above-described problems, and an object thereof is to provide a linear guide enabling lubricant to be evenly supplied to upper and lower direction changing paths regardless of a type of the lubricant.

### SOLUTION TO PROBLEM

The above object of the present invention is achieved by the following configuration.

A linear guide includes: a guide rail; a slider main body of a slider including a plurality of rolling element raceway grooves and rolling element return paths and slidably engaged with the guide rail so as to straddle the guide rail; and a pair of end caps each including a plurality of direction changing paths and respectively attached to end portions of the slider main body in an axial direction of the slider main body,
at least one of the pair of end caps is provided with a lubricant introduction portion for introducing lubricant into the end cap, a lubricant path in communication with the lubricant introduction portion and configured to guide the lubricant to the direction changing paths, and a plurality of lubricant supply holes in communication with the lubricant path and the plurality of direction changing paths and configured to supply the lubricant to the direction changing paths, and
in the lubricant path, a lubricant guide portion is provided between adjacent two among the plurality of lubricant supply holes arranged along a lubricant supply direction, the lubricant guide portion introducing the lubricant into one on an upstream side among the lubricant supply holes by protruding into the lubricant path and partially restricting flow of the lubricant.

### ADVANTAGEOUS EFFECTS OF INVENTION

According to the linear guide of the present invention, it is possible to provide a linear guide enabling the lubricant to be evenly supplied to the upper and lower direction changing paths regardless of a type of the lubricant.

### BRIEF DESCRIPTION OF DRAWINGS

FIG. 1 is a perspective view of a linear guide according to a first embodiment of the present invention.
FIG. 2 is a front view of an end cap of the first embodiment shown in FIG. 1 as viewed from a slider main body side facing the end cap.
FIGS. 3A to 3C are respectively a front view of a return guide according to the first embodiment shown in FIG. 2, a cross-sectional view taken along a line A-A, and a cross-sectional view taken along a line B-B.
FIGS. 4A to 4C are respectively a front view of a return guide according to a second embodiment of the present invention, a cross-sectional view taken along a line C-C, and a cross-sectional view taken along a line D-D.
FIGS. 5A to 5C are respectively a front view of a return guide according to a third embodiment of the present invention, a cross-sectional view taken along a line E-E, and a cross-sectional view taken along a line F-F.

### DESCRIPTION OF EMBODIMENTS

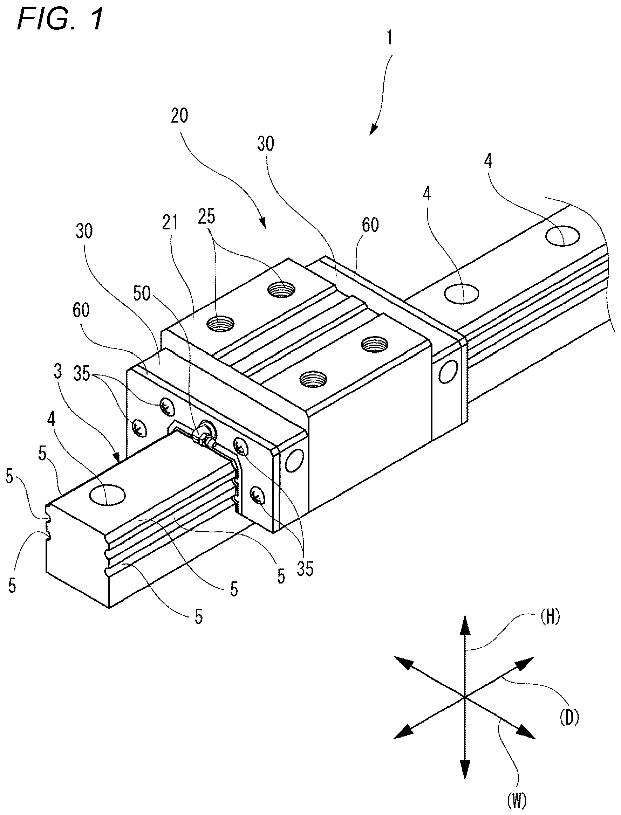

Hereinafter, a linear guide according to embodiments of the present invention will be described in detail with reference to the drawings. In the following description, an upper-lower direction (H) and a width direction (W) of a slider respectively represent directions in a state where the slider is assembled to a guide rail arranged with a longitudinal direction (D) being horizontal, and the width direction (W) of the slider is a direction perpendicular to the longitudinal direction of the guide rail and the upper-lower direction (H) of the slider, and is also referred to as a left-right direction (see FIG. 1). The longitudinal direction (D) of the slider is also referred to as an axial direction.

As shown in FIG. 1, a linear guide 1 according to a first embodiment of the present invention includes a linear guide rail 3 and a slider 20 that is assembled to straddle the guide rail 3, slidably engaged with the guide rail 3 via a plurality of rolling elements (balls) (not shown), and has a C-shaped cross section.

The guide rail 3 is made of metal, and on both side surfaces in the width direction, rail-side raceway surfaces 5 extending in the axial direction are formed in three rows on each side, and a total of six rows. The guide rail 3 has a plurality of rail attachment holes 4 each penetrating in a height direction of the guide rail 3, and rail fixing bolts (not shown) for fixing the guide rail 3 to an attachment surface (not shown) are inserted in the rail attachment holes 4.

The slider 20 includes a slider main body 21 having sleeve portions on both left and right sides of the guide rail 3, a pair of end caps 30, 30 attached to both end portions of the slider main body 21 in the front-rear direction (axial direction), return guides 40, 40 incorporated into the end caps 30, 30 in pairs, and a pair of side seals 60, 60 for sealing gaps between the guide rail 3 and the end caps 30, 30.

The slider main body 21 includes a plurality of (three in the present embodiment) slider-side raceway surfaces and rolling element return paths (not shown) on each of left and right sides. The slider-side raceway surfaces are formed on inner surfaces of the two sleeve portions of the slider main body 21, face the rail-side raceway surfaces 5 of the guide rail 3, and three load rolling paths are formed by the rail-side raceway surfaces 5 and the slider-side raceway surfaces. The rolling element return paths are formed by three holes penetrating thick portions of the two sleeve portions in the axial direction of the guide rail 3. Further, on an upper surface of the slider main body 21, driven-object-fixing-screw insertion holes 25 through each of which a bolt for fixing a driven object such as a table to the slider 20 is inserted.

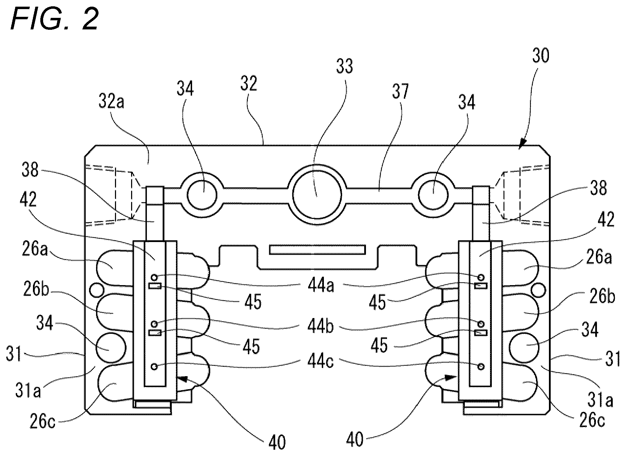

As shown in FIG. 2, the end cap 30 of the first embodiment is, for example, an injection molded product of a synthetic resin material, and is formed to have a C-shaped cross section as the slider main body 21. In the end cap 30, a plurality of attachment-screw insertion holes 34 are formed, and the end cap 30 and the side seal 60 are fastened to an end portion (facing surface) in the front-rear direction of the slider main body 21 by attachment screws 35 inserted through the attachment-screw insertion holes 34.

Further, on each of left and right sleeve portions 31 of the end cap 30, the return guide 40 is assembled on a contact surface 31a side facing the end portion in the front-rear direction of the slider main body 21. The return guide 40 is fitted into a recess portion formed in a contact surface 31a of the end cap 30, thus defining a plurality of (three in the present embodiment) direction changing paths 26a, 26b, and 26c between the return guide 40 and the end cap 30. The direction changing paths 26a, 26b, and 26c are respectively connected to the three load rolling paths and the rolling element return paths of the slider main body 21.

The load rolling paths, the rolling element return paths, and the direction changing paths 26a, 26b, and 26c form rolling element circulation paths. Many rolling elements (balls) are rollably loaded in the rolling element circulation paths, and the slider 20 can relatively move along the axial direction on the guide rail 3 via the rolling elements that endlessly circulate while rolling in the rolling element circulation paths.

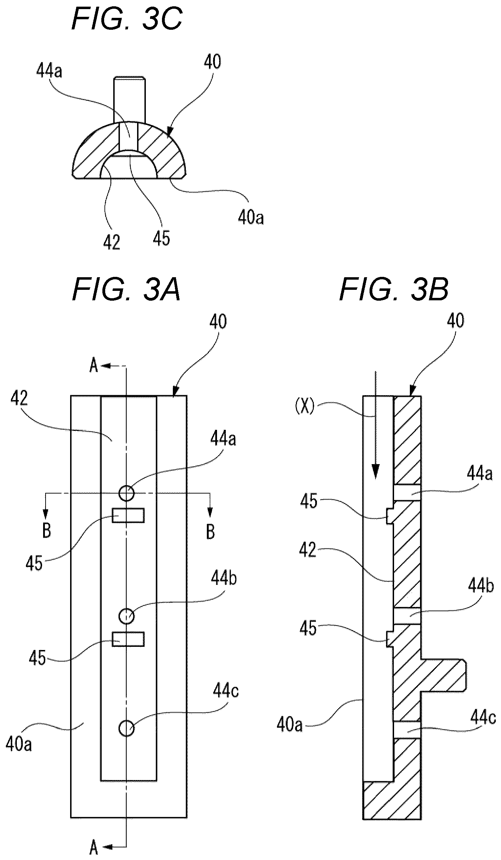

A facing surface 40a of the return guide 40 facing the end portion in the front-rear direction of the slider main body 21 is provided with a lubricant path groove 42 having a semicircular cross section and communicating with the direction changing paths 26a, 26b, and 26c via a plurality of (three in the present embodiment) lubricant supply holes 44a, 44b, and 44c arranged in series along a lubricant supply direction (downward in the upper-lower direction) (see FIGS. 3A to 3C).

A horizontal portion 32 of the end cap 30 is provided with a lubricant path groove 37, extending in the width direction, on a contact surface 32a side facing the end portion in the front-rear direction of the slider main body 21. A lubricant introduction portion 33 for introducing the lubricant from a nipple 50 into the end cap 30 is bored in a central portion of the lubricant path groove 37.

The contact surface 31a of each of the left and right sleeve portions 31 of the end cap 30 is provided with a lubricant path groove 38 extending from the lubricant path groove 37 to the lubricant path groove 42 of the return guide 40.

By fixing the end cap 30 to the end portion in the front-rear direction of the slider main body 21, a lubricant path that communicates with the lubricant introduction portion 33 and guides the lubricant to the direction changing paths 26a, 26b, and 26c, is defined between an end surface of the slider main body 21 and the lubricant path groove 37, the lubricant path groove 38, and the lubricant path groove 42 of the end cap 30.

Accordingly, the slider 20 in which the end cap 30 is fixed to the end portion in the front-rear direction of the slider main body 21 is provided with the lubricant introduction portion 33 that introduces the lubricant into the end cap 30; the lubricant path that communicates with the lubricant introduction portion 33 and guides the lubricant to the direction changing paths 26a, 26b, and 26c; and the plurality of lubricant supply holes 44a, 44b, and 44c that communicate with the lubricant path and the plurality of direction changing paths 26a, 26b, and 26c, and supply the lubricant to the respective direction changing paths 26a, 26b, and 26c. Further, the lubricant introduced into the end cap 30 from the nipple 50 reaches the lubricant path grooves 42 from the lubricant introduction portion 33 through the lubricant path grooves 37 and 38, and is supplied to the direction changing paths 26a, 26b, and 26c through the lubricant supply holes 44a, 44b, and 44c, respectively.

As shown in FIGS. 3A to 3C, in the lubricant path groove 42 of the return guide 40 according to the first embodiment, a plurality of (two in the present embodiment) lubricant guide portions 45 are arranged in series between the three lubricant supply holes 44a, 44b, and 44c arranged in series along the lubricant supply direction (X).

The lubricant guide portions 45 are plate-shaped weir portions protruding from the lubricant path groove 42 respectively on a downstream side of the vicinity of the lubricant supply holes 44a and 44b, in order to introduce the lubricant into the lubricant supply holes 44a and 44b on the upstream side by protruding into the lubricant path and partially restricting flow of the lubricant from an upper side to a lower side.

Accordingly, the slider 20 of the linear guide 1 according to the first embodiment can prevent, by the lubricant guide portions 45 and 45 provided between the plurality of arranged lubricant supply holes 44a, 44b, and 44c, the lubricant from passing as it is through the lubricant supply holes 44a and 44b on an upstream side toward the lubricant supply holes 44b and 44c on a downstream side even when oil having a low viscosity is used as the lubricant. Therefore, the oil is easily supplied to the upper direction changing paths 26a and 26b of the end cap 30, and the lubricant path suitable for both the oil and the grease having different viscosities can be designed. Further, unlike the motion guide device of Patent Literature 1 described above, it is not necessary to use different parts such as the attachment depending on the lubricant path.

Accordingly, the linear guide 1 according to the present embodiment can evenly supply the lubricant to the upper and lower direction changing paths regardless of the type of the lubricant.

As shown in FIGS. 3A to 3C, the lubricant guide portions 45 according to the first embodiment protrude from the lubricant path groove 42 on the downstream side of the vicinity of the lubricant supply holes 44a and 44b so as to be spaced apart from the lubricant supply holes 44a and 44b. Therefore, when grease having a high viscosity is used as the lubricant, the grease can be prevented from clogging between the lubricant guide portions 45 and the lubricant supply holes 44a and 44b.

Further, when oil having a low viscosity is used as the lubricant, it is desirable that the lubricant guide portions 45 are provided to protrude from the lubricant path groove 42 on the downstream side in the vicinity of the lubricant supply holes 44a and 44b so as to be adjacent to the lubricant supply holes 44a and 44b. In this case, there is no step between the lubricant guide portions 45 and the respective lubricant supply holes 44a and 44b, and oil is more easily supplied to the lubricant supply holes 44a and 44b on the upstream side.

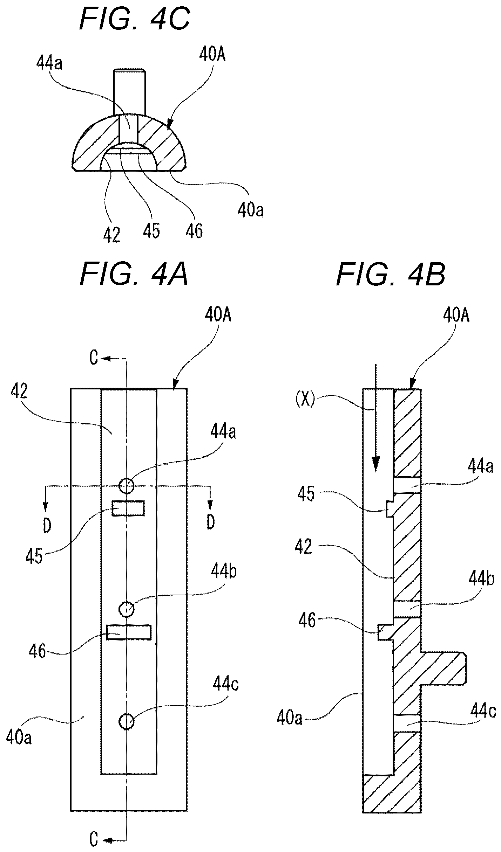

FIGS. 4A to 4C are respectively a front view of a return guide 40A according to a second embodiment of the present invention, a cross-sectional view taken along a line C-C, and a cross-sectional view taken along a line D-D.

In the lubricant path groove 42 of the return guide 40A according to the second embodiment, two lubricant guide portions 45 and 46 are arranged in series between three lubricant supply holes 44a, 44b, and 44c arranged in series along the lubricant supply direction (X).

The lubricant guide portions 45 and 46 are plate-shaped weir portions respectively provided on a downstream side of the vicinity of the lubricant supply holes 44a and 44b, in order to introduce the lubricant into the lubricant supply holes 44a and 44b on the upstream side by protruding into the lubricant path and partially restricting flow of the lubricant from an upper side to a lower side. Further, the lubricant guide portion 46 on the downstream side has a larger protrusion height than the lubricant guide portion 45 on the upstream side.

Accordingly, in the lubricant path groove 42 of the return guide 40A according to the second embodiment, the lubricant is also easily guided to the lubricant supply hole 44b disposed between the lubricant supply hole 44a on the upstream side and the lubricant supply hole 44c on the downstream side. Thus, the effect of evenly supplying the lubricant to the upper and lower direction changing paths 26a, 26b, and 26c in the end cap 30 can be further enhanced.

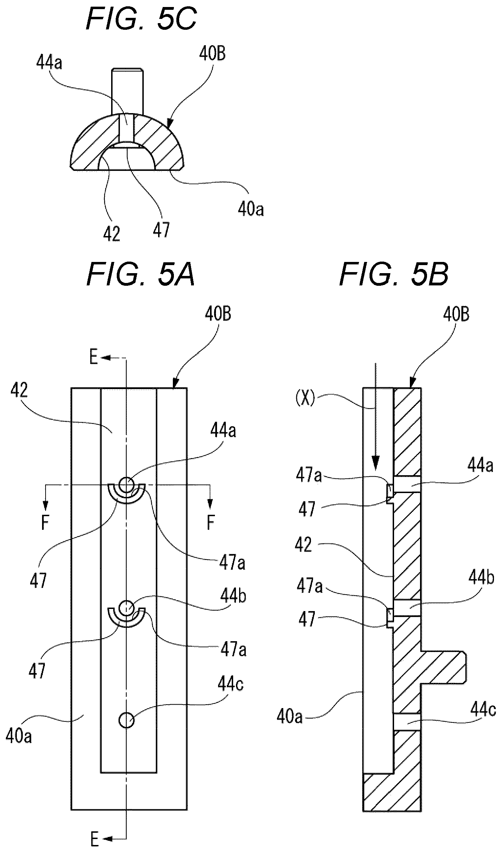

FIGS. 5A to 5C are respectively a front view of a return guide 40B according to a third embodiment of the present invention, a cross-sectional view taken along a line E-E, and a cross-sectional view taken along a line F-F.

In the lubricant path groove 42 of the return guide 40B according to the third embodiment, two lubricant guide portions 47, 47 are arranged in series between the three lubricant supply holes 44a, 44b, and 44c arranged in series along the lubricant supply direction (X).

The lubricant guide portions 47 are semi-cylindrical weir portions respectively provided on a downstream side of the vicinity of the lubricant supply holes 44a and 44b, in order to introduce the lubricant into the lubricant supply holes 44a and 44b on the upstream side by protruding into the lubricant path and partially restricting flow of the lubricant from an upper side to a lower side. The lubricant guide portion 47 has a cylindrical surface 47a coaxial with a corresponding one of the lubricant supply holes 44a and 44b adjacent thereto.

Accordingly, in the lubricant path groove 42 of the return guide 40B according to the third embodiment, the lubricant is efficiently guided to the lubricant supply holes 44a and 44b by the cylindrical surfaces 47a of the lubricant guide portions 47. Therefore, the lubricant is more easily supplied to the upper direction changing paths 26a and 26b. Thus, the effect of evenly supplying the lubricant to the upper and lower direction changing paths 26a, 26b, and 26c in the end cap 30 can be further enhanced.

Therefore, according to the linear guide 1 of each of the above-described embodiments, it is possible to provide a linear guide enabling the lubricant (oil or grease) to be evenly supplied to the upper and lower direction changing paths 26a, 26b, and 26c regardless of the type of the lubricant.

The present invention is not limited to the above-described embodiments, and can be appropriately modified, improved, or the like. Further, a material, a shape, a size, the number of, an arrangement position, and the like of each component in the above-described embodiment are be freely set and are not limited as long as the present invention can be achieved.

For example, in the slider 20 of each of the above-described embodiments, the end caps 30 are respectively attached to both end portions in the axial direction of the slider main body 21, but the slider of the present invention is not limited thereto. The end cap 30 may be attached to at least one of the end portions of the slider main body 21, and the end cap attached to the other end portion of the slider main body 21 may not include the lubricant introduction portion, the lubricant path, and the lubricant supply hole.

Further, although the lubricant guide portions 45, 46, and 47 of the above-described embodiments are plate-shaped or semi-cylindrical weir portions, the lubricant guide portion of the present invention is not limited thereto, and it is needless to say that various forms can be adopted based on the gist of the present invention.

Further, as the rolling elements of the linear guide, cylindrical rollers may be used instead of the balls.

Here, the features of the embodiments of the linear guide according to the present invention described above will be briefly summarized and listed in the following [1] to [5].
[1] A linear guide (1) including:
   a guide rail (3);
   a slider main body (21) of a slider (20) including a plurality of rolling element raceway grooves and rolling element return paths and slidably engaged with the guide rail (3) so as to straddle the guide rail (3); and
   a pair of end caps (30) each including a plurality of direction changing paths (26a, 26b, 26c) and respectively attached to end portions of the slider main body (21) in an axial direction of the slider main body (21), in which
   at least one of the pair of end caps (30) is provided with a lubricant introduction portion (33) for introducing lubricant into the end cap (30), a lubricant path (lubricant path grooves 37, 38, 42) in communication with the lubricant introduction portion (33) and configured to guide the lubricant to the direction changing paths (26a, 26b, 26c), and a plurality of lubricant supply holes (44a, 44b, 44c) in communication with the lubricant path (lubricant path grooves 37, 38, 42) and the plurality of direction changing paths (26a, 26b, 26c) and configured to supply the lubricant to the direction changing paths (26a, 26b, 26c), and
   in the lubricant path (lubricant path grooves 37, 38, 42), a lubricant guide portion (45, 46, 47) is provided between adjacent two among the plurality of lubricant supply holes (44a, 44b, 44c) arranged along a lubricant supply direction, the lubricant guide portion (45, 46, 47) introducing the lubricant into one (44a, 44b) on an upstream side among the lubricant supply holes by protruding into the lubricant path (lubricant path grooves 37, 38, 42) and partially restricting flow of the lubricant.

According to the configuration of the above [1], even when oil having a low viscosity is used as the lubricant, the lubricant can be prevented from passing as it is through the lubricant supply holes (44a, 44b) on the upstream side toward the lubricant supply holes (44b, 44c) on a downstream side by the lubricant guide portions (45, 46, 47) provided between the plurality of arranged lubricant supply holes (44a, 44b, 44c). Therefore, the oil is easily supplied to the upper direction changing paths (26a, 26b) in the end cap (30), and the lubricant path (lubricant path grooves 37,38, 42) suitable for both the oil and the grease having different viscosities can be designed.

[2] The linear guide (1) according to the above [1], in which
the lubricant guide portion (45, 46, 47) is spaced apart from the lubricant supply hole (44a, 44b).

According to the configuration of the above [2], when grease having a high viscosity is used as the lubricant, the grease can be prevented from clogging between the lubricant guide portion (45, 46, 47) and the lubricant supply holes (44a, 44b).

[3] The linear guide (1) according to the above [1], in which
the lubricant guide portion (45, 46, 47) is provided adjacent to the lubricant supply hole (44a, 44b).

According to the configuration of the above [3], there is no step between the lubricant guide portion (45, 46, 47) and the lubricant supply hole (44a, 44b), and oil is more easily supplied to the lubricant supply hole (44a, 44b) on the upstream side.

[4] The linear guide (1) according to any one of the above [1] to [3], in which
among a plurality of the lubricant guide portions (45, 46) arranged in series along the lubricant supply direction, a protrusion height of the lubricant guide portion (46) on a downstream side is larger than a protrusion height of the lubricant guide portion (45) on an upstream side.

According to the configuration of the above [4], the lubricant is also easily guided to the lubricant supply hole (44b) disposed between the lubricant supply hole (44a) on the upstream side and the lubricant supply hole (44c) on the downstream side. Thus, the effect of evenly supplying the lubricant to the upper and lower direction changing paths (26a, 26b, 26c) in the end cap (30) can be further enhanced.

[5] The linear guide (1) according to any one of the above [1] to [4], in which
the lubricant guide portion (47) has a cylindrical surface (47a) coaxial with the lubricant supply hole (44a, 44b) adjacent to the lubricant guide portion (47).

According to the configuration of the above [5], the lubricant is efficiently guided to the lubricant supply hole (44a, 44b) by the cylindrical surface (47a) of the lubricant guide portion (47). Thus, the lubricant is more easily supplied to the upper direction changing paths (26a, 26b). Thus, the effect of evenly supplying the lubricant to the upper and lower direction changing paths (26a, 26b, 26c) in the end cap (30) can be further enhanced.

The present application is based on the Japanese patent application (Japanese Patent Application No. 2022-037909) filed on March 11, 2022.

### INDUSTRIAL APPLICABILITY

According to the linear guide of the present invention, an effect of enabling the lubricant to be evenly supplied to the upper and lower direction changing paths regardless of a type of the lubricant can be exerted. The present invention having the effect is useful in prevention of a failure such as burning of the linear guide.

### REFERENCE SIGNS LIST

1: linear guide
3: guide rail
20: slider
21: slider main body
26a, 26b, 26c: direction changing path
30: end cap
33: lubricant introduction portion
37, 38, 42: lubricant path groove (lubricant path)
44a, 44b, 44c: lubricant supply hole
45, 46, 47: lubricant guide portion

## Claims

1. A linear guide (1) comprising:
a guide rail (3);
a slider main body (21) of a slider including a plurality of rolling element raceway grooves and rolling element return paths and slidably engaged with the guide rail so as to straddle the guide rail; and
a pair of end caps (30) each including a plurality of direction changing paths (26a,26b,26c) and respectively attached to end portions of the slider main body in an axial direction of the slider main body, wherein
at least one of the pair of end caps is provided with a lubricant introduction portion (33) for introducing lubricant into the end cap, a lubricant path (42) in communication with the lubricant introduction portion and configured to guide the lubricant to the direction changing paths, and a plurality of lubricant supply holes (44a,44b,44c) in communicate with the lubricant path and the plurality of direction changing paths and configured to supply the lubricant to the direction changing paths, **characterized in that**
in the lubricant path, a lubricant guide portion (45,46) is provided between adjacent two among the plurality of lubricant supply holes arranged along a lubricant supply direction, the lubricant guide portion introducing the lubricant into one on an upstream side among the lubricant supply holes by protruding into the lubricant path and partially restricting flow of the lubricant.

2. The linear guide according to claim 1, wherein
the lubricant guide portion is spaced apart from the lubricant supply hole.

3. The linear guide according to claim 1, wherein
the lubricant guide portion is provided adjacent to the lubricant supply hole.

4. The linear guide according to any one of claims 1 to 3, wherein
among a plurality of the lubricant guide portions arranged in series along the lubricant supply direction, a protrusion height of the lubricant guide portion on a downstream side is larger than a protrusion height of the lubricant guide portion on an upstream side.

5. The linear guide according to any one of claims 1 to 4, wherein
the lubricant guide portion has a cylindrical surface coaxial with the lubricant supply hole adjacent to the lubricant guide portion.

## Patentansprüche

1. Linearführung (1), die umfasst:
eine Führungsschiene (3);
einen Läufer-Hauptkörper (21) eines Läufers, der eine Vielzahl von Wälzkörper-Laufbahnnuten sowie Wälzkörper-Rücklaufbahnen aufweist und gleitend so mit der Führungsschiene in Eingriff ist, dass er die Führungsschiene überspannt; sowie
ein Paar Endkappen (30), die jeweils eine Vielzahl von Richtungsänderungs-Wegen (26a, 26b, 26c) aufweisen und jeweils an Endabschnitten des Läufer-Hauptkörpers in einer axialen Richtung des Läufer-Hauptkörpers angebracht sind, wobei
wenigstens eine der paarigen Endkappen mit einem Schmiermittel-Einleitabschnitt (33) zum Einleiten von Schmiermittel in die Endkappe, einem Schmiermittel-Weg (42), der in Verbindung mit dem Schmiermittel-Einleitabschnitt steht und so ausgeführt ist, dass er das Schmiermittel zu den Richtungsänderungs-Wegen leitet, sowie einer Vielzahl von Schmiermittel-Zuführlöchern (44a, 44b, 44c) versehen ist, die in Verbindung mit dem Schmiermittel-Weg und der Vielzahl von Richtungsänderungs-Wegen stehen und so ausgeführt sind, dass sie das Schmiermittel den Richtungsänderungs-Wegen zuführen, **dadurch gekennzeichnet, dass**
auf dem Schmiermittel-Weg ein Schmiermittel-Leitabschnitt (45, 46) zwischen zwei benachbarten der Vielzahl von Schmiermittel-Zuführlöchern vorhanden ist, die in einer Schmiermittel-Zuführrichtung angeordnet sind, wobei der Schmiermittel-Leitabschnitt das Schmiermittel dadurch in eines der Schmiermittel-Zuführlöcher an einer stromauf liegenden Seite einleitet, dass er in den Schmiermittel-Weg hinein vorsteht und Strom des Schmiermittels teilweise drosselt.

2. Linearführung nach Anspruch 1, wobei
der Schmiermittel-Leitabschnitt von dem Schmiermittel-Zuführloch beabstandet ist.

3. Linearführung nach Anspruch 1, wobei
der Schmiermittel-Leitabschnitt an das Schmiermittel-Zuführloch angrenzt.

4. Linearführung nach einem der Ansprüche 1 bis 3, wobei
von einer Vielzahl der Schmiermittel-Leitabschnitte, die in Reihe in der Schmiermittel-Zuführrichtung angeordnet sind, eine Höhe, um die der Schmiermittel-Leitabschnitt an einer stromab liegenden Seite vorsteht, größer ist als eine Höhe, um die der Schmiermittel-Leitabschnitt an einer stromauf liegenden Seite vorsteht.

5. Linearführung nach einem der Ansprüche 1 bis 4, wobei
der Schmiermittel-Leitabschnitt eine zylindrische Fläche koaxial zu dem Schmiermittel-Zuführloch an den Schmiermittel-Leitabschnitt angrenzend aufweist.

## Revendications

1. Guide linéaire (1) comprenant :
un rail de guidage (3) ;
un corps principal de coulisseau (21) d'un coulisseau comportant une pluralité de rainures de roulement d'éléments roulants et de chemins de retour d'éléments roulants et en contact coulissant avec le rail de guidage de façon à chevaucher le rail de guidage ; et
une paire de caches d'extrémité (30) comportant chacun une pluralité de chemins de changement de direction (26a, 26b, 26c) et fixés respectivement à des parties d'extrémité du corps principal de coulisseau dans une direction axiale du corps principal de coulisseau, dans lequel
au moins l'un de la paire de caches d'extrémité est pourvu d'une partie d'introduction de lubrifiant (33) pour introduire du lubrifiant dans le bouchon d'extrémité, un chemin de lubrifiant (42) en communication avec la partie d'introduction de lubrifiant et conçu pour guider le lubrifiant vers les chemins de changement de direction, et une pluralité d'orifices de fourniture de lubrifiant (44a, 44b, 44c) en communication avec le chemin de lubrifiant et la pluralité de chemins de changement de direction et conçus pour fournir le lubrifiant aux chemins de changement de direction, **caractérisé en ce que**
dans le chemin de lubrifiant, une partie de guidage de lubrifiant (45, 46) est fournie entre deux orifices adjacents parmi la pluralité d'orifices de fourniture de lubrifiant disposés le long d'une direction de fourniture de lubrifiant, la partie de guidage de lubrifiant introduisant le lubrifiant dans un orifice côté amont parmi la pluralité d'orifices de fourniture de lubrifiant en faisant saillie dans le chemin de lubrifiant et en limitant partiellement l'écoulement de lubrifiant.

2. Guide linéaire selon la revendication 1, dans lequel
la partie de guidage de lubrifiant est espacée par rapport à l'orifice de fourniture de lubrifiant.

3. Guide linéaire selon la revendication 1, dans lequel
la partie de guidage de lubrifiant est fournie adjacente à l'orifice de fourniture de lubrifiant.

4. Guide linéaire selon l'une quelconque des revendications 1 à 3, dans lequel
parmi une pluralité des parties de guidage de lubrifiant disposées en série dans la direction de fourniture du lubrifiant, une hauteur de saillie de la partie de guidage de lubrifiant d'un côté aval est supérieure à une hauteur de saillie de la partie de guidage de lubrifiant d'un côté amont.

5. Guide linéaire selon l'une quelconque des revendications 1 à 4, dans lequel
la partie de guidage de lubrifiant a une surface cylindrique coaxiale avec un orifice de fourniture de lubrifiant adjacent à la partie de guidage de lubrifiant.
